(19) Europäisches Patentamt
European Patent Office
Office européen des brevets

(11) **EP 4 687 010 A1**

(12) **EUROPEAN PATENT APPLICATION**

(43) Date of publication:
**04.02.2026 Bulletin 2026/06**

(21) Application number: **24192123.8**

(22) Date of filing: **31.07.2024**

(51) International Patent Classification (IPC):
**G06F 3/01** (2006.01)

(52) Cooperative Patent Classification (CPC):
**G06F 3/013; G02B 27/0093; G06F 3/011;
G06N 3/02; G06N 3/044; G06N 3/045; G06N 3/08;
G06N 3/084**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Carl Zeiss Vision International GmbH
73430 Aalen (DE)**

(72) Inventors:
- **HOSP, Benedikt W.
72074 Tübingen (DE)**
- **WAHL, Siegfried
73430 Aalen (DE)**
- **SAUER, Yannick
73430 Aalen (DE)**
- **SEVERITT, Björn
72074 Tübingen (DE)**

(74) Representative: **Kraus & Lederer PartGmbB
Thomas-Wimmer-Ring 15
80539 München (DE)**

(54) **METHOD FOR DETERMINING A FIXATION DISTANCE PARAMETER, TRAINING METHOD AND CORRESPONDING DEVICE**

(57)      A method for determining a fixation distance parameter of a person is provided. The method includes receiving a sequence of measurement data for a plurality of points in time, wherein the measurement data for each point in time includes the following features: a position of a right eye of the person, a first eye vector indicative of an orientation of the right eye of the person, a position of a left eye of the person and a second eye vector indicative of an orientation of the left eye of the person, and providing input data based on the measurement data (md) to an artificial neural network, wherein the artificial neural network is trained to provide the fixation distance parameter based on the input data The measurement data is given in a coordinate system of a measurement device used for obtaining the measurement data, and the measurement data is uncalibrated with respect to the person and with respect to a world coordinate system.

**Fig. 2**

**Description**

The present application relates to methods for determining a fixation distance parameter of a person, methods for training an artificial neural network for determining a fixation distance parameter of a person, a corresponding device for determining the fixation distance parameter of a person and spectacles including such a device.

The fixation distance is to be understood as the distance of one or more objects from the person or a device worn by the person to one or more objects the person is looking at, i.e. fixing his or her gaze on. Usually, with correct accommodation of the eyes of the person, this also means that the eyes are focused to this distance. Therefore, sometimes the fixation distance is also referred to as focus distance. However, in case of persons suffering from ametropia (e.g. myopia, hyperopia or presbyopia), the eyes cannot focus correctly on objects at every distance, such that the eyes may not be correctly focused on objects the person is looking at. Hence, the term fixation distance is used herein.

The term fixation distance parameter refers to a parameter mathematically directly related to the fixation distance or, in other words, a parameter that indicates the fixation distance. The fixation distance parameter may be the fixation distance itself (in which case the mathematical relationship is identity). In other cases, the fixation distance parameter may be the reciprocal fixation distance, which, when the fixation distance is give in centimeters, corresponds to the optical refraction power in diopters necessary for focusing the fixation distance. Due to the mathematical relationship, determining such a fixation distance parameter other than the fixation distance itself is equivalent to determining the fixation distance.

Knowing the fixation distance parameter is desirable for various applications like virtual reality (VR) applications or in particular smart glasses technology. For example, conventional approaches designed to address presbyopia - a condition that diminishes the eye's ability to focus on close objects as people age - such as bifocal of multifocal lenses often fall short of mimicking the eye's natural focusing capability, leading to restricted gaze and visual inconvenience. Progressive lenses may offer some correction but may introduce aberrations in a peripheral field of view. Autofocal glasses, which for example use optical quality liquids in flexible membranes to dynamically adjust focal length, represent a more natural and innovative solution for presbyopia. Such autofocal glasses are for example discussed in Rajat Agarwala, Olga Lukashova Sanz, Immanuel P Seitz, Felix F Reichel, and Siegfried Wahl: Evaluation of a liquid membrane-based tunable lens and a solid-state lidar camera feedback system for presbyopia, Biomedical Optics Express, 13(11):5849-5859, 2022 or Lihui Wang, Alvaro Cassinelli, Hiromasa Oku, and Masatoshi Ishikawa: A pair of diopter-adjustable eyeglasses for presbyopia correction, Novel Optical Systems Design and Optimization XVII, volume 9193, pages 369-378. SPIE, 2014.

For adjusting such autofocal glasses to the correct refraction values, the fixation distance parameter needs to be known, to be able to adjust the autofocal glasses to a state where they correct ametropia of the eyes for this particular fixation distance parameter.

Previous approaches for determining the fixation distance or other fixation distance parameter of a person require at least an initial calibration to the person and then often frequent recalibrations, which is tedious for practical use.

For example, US1 1,238,340B1 discloses a device which inter alia predicts a vergence depth of the eye, i.e. a distance where lines of sight of the eyes intersect and which may be used as an estimate of the fixation depth, based on eye tracking data and using a recurrent neural network (RNN). For eye tracking, the device disclosed in this document uses a head-mounted device (HMD) including an eye tracking unit. Additionally, the head-mounted device includes various components like an inertial measurement unit (IMU), position sensors and locators which are used for position calibration. Therefore in the approach of this document a calibration is necessary for operating the system.

The need for calibration, however, limits the use in devices like spectacle with autofocal glasses.

Therefore, it is an object to provide methods and devices capable of determining the fixation depth without calibration.

To achieve this object, a computer-implemented method for determining a fixation distance parameter of a person is provided, comprising:

- receiving a sequence of measurement data for a plurality of points in time, wherein the measurement data for each point in time includes the following features: a position for a right eye of the person, a first eye vector indicative of an orientation of the right eye of the person, a position of a left eye of the person and a second eye vector indicative of an orientation of the left eye of the person, and
- providing input data based on the measurement data to an artificial neural network, wherein the artificial neural network is trained to provide the fixation distance parameter based on the input data.

The method is characterized in that the measurement data is given in a coordinate system of a measurement device used for obtaining the measurement data, and the measurement data is uncalibrated with respect to the person and with respect to a world coordinate system.

In this way, i.e. by using such measurement data (also referred to as uncalibrated measurement data) as sequence in time and corresponding data also for training as explained below, the fixation distance parameter may be obtained without the need for person-specific calibration or calibration with respect to some world coordinate system may be obtained. In other words, as the artificial neural network is trained with training data based on such uncalibrated measurement data, also the determination of the fixation distance parameter may be performed using such uncalibrated measurement data.

The term world coordinate system refers to a coordinate system giving the position of the measurement device in space. Typically, the measurement device is worn by the person, and therefore such a position in the world coordinate system, would also indicate the position of the person, in particular the position of a head of the person.

Measurement devices used for obtaining the measurement data mentioned above are also referred to as eye trackers and are per se known commercially available devices. For example, typical eye trackers use an illumination of the eye by infrared (IR) patterns and capturing an image of the IR pattern as projected onto the eye for obtaining the measurement data. One such eye tracker is for example also described in US1 1,238,340 B1 mentioned above.

The position of the right and left eyes may for example be given in terms of the respective pupil positions, in terms of an estimated center of rotation of the respective eye or in terms of origins of the eye vectors discussed below. The latter possibility is used in examples given below, but other ways of indicating the positions may also be used.

The first and second eye vectors may be any vectors which indicate the orientation of the eye and may be given in a Cartesian coordinate system (x,y,z) or also in a polar coordinate system with two angles indicating azimuth and elevation with respect to a reference direction with respect to the measurement device. In the following, vectors in Cartesian coordinates will be used as examples. The first and second eye vectors may give the orientation of the respective optical axis of the left and right eye, respectively. The optical axis is defined as the line that passes through the centers of the optical components of the eye, such as the cornea, the pupil, and the lens, and is perpendicular to these surfaces. This axis is sometimes also referred to as pupillary axis. In other embodiments, In contrast, the visual axis, sometimes also referred to as the foveal axis, is defined by a line that is not perpendicular to the retina but instead ends on the fovea of the eye. Typically, eye-tracking methods need to estimate this offset to estimate the precise point of regard (POR) in 3D space because only the optical axis is easily detectable from eye images directly. However, as the method described above does not rely on the actual POG but instead on the features measured for a plurality of points in time, the visual axis is not needed and uncalibrated eye images as input may be used. However, in other embodiments the orientation of the visual axes may be used as eye vectors.

An artificial neural network, shortly referred to as neural network, generally consists of connected units or nodes referred to as artificial neurons, which are connected by so called edges. The neurons are organized in layers, which include an input layer receiving the input data, hidden layers which process the input data and an output layer which outputs the fixation distance parameter. Technical terms regarding artificial neural networks below are used corresponding to their common meaning in the art, unless definitions to the contrary are given below.

For training the artificial neural network, additionally a method for training an artificial neural network for determining a fixation distance parameter of a person is provided, comprising:

- receiving a plurality of training sequences for a plurality of persons of measurement data for a plurality of points in time, wherein the measurement data for each point in time includes the following features: a position of a right eye of the respective person, a first eye vector indicative of an orientation of the right eye of the respective person, a position of a left eye of the respective person and a second eye vector indicative of an orientation of the left eye of the respective person, and a fixation distance parameter of the respective person, and
- providing training data based on the measurement data to the artificial neural network, to train the artificial neural network, wherein the fixation distance parameter is used as ground truth.

The training method is characterized in that the measurement data is given in a coordinate system of a measurement device used for obtaining the measurement data, and the measurement data is uncalibrated with respect to the person and with respect to a world coordinate system.

The training measurement data may for example be obtained using a virtual reality environment, where a target onto which a person should direct his or her gaze is generated using virtual reality techniques. In other embodiments, also real targets with known fixation distance parameter may be used.

The explanations given above for the method for determining the fixation distance parameter (which corresponds to the inference for the artificial neural network and will be referred to shortly as inference below when distinguishing it against training) applies also to the training method, and the training is performed essentially corresponding to the inference. Additionally, the fixation distance parameter is provided as ground truth, i.e. as target value for the training. In other words, the artificial neural network is trained to obtain the given fixation distance parameter for the respective training data.

Unless noted otherwise, the following explanations for preferred embodiments of the artificial neural network and preprocessing for providing the input data based on the measurement data or providing the training data based on the measurement data apply both to the method for determining the fixation distance parameter, i.e. inference, and to the training.

Preferably, the artificial neural network comprises a Long Short-Term Memory (LSTM) network. A LSTM is a type of recurrent neural network (RNN) which enables learning on the sequence in time. This improves the processing of the sequence for the plurality of time points.

In an embodiment, the artificial neural network furthermore comprises a max pooling layer downstream of the Long Short-Term Memory network. Through the training, this max pooling layer selects an optimum point in time of the sequence in time of the sequence and data associated therewith for further processing. As the data has already been processed by the LSTM, this data is abstract data after the processing and not directly corresponding to the input data (or training data, in case of training). Generally, max pooling is a pooling operation that calculates the maximum value for patches of a feature map, and thus creates a downsampled, i.e. pooled, feature map.

By using the max pooling layer, the quality of the result, i.e. the preciseness of the determined fixation distance parameter, may be improved.

The artificial neural network may then comprise at least one further layer downstream of the max pooling layer and configured to determine the fixation distance parameter based on the data selected by the max pooling layer. The at least one further layer may include a dropout layer, which randomly excludes a portion of neurons during training, which in some embodiments reduces overfitting and encourages the artificial neural network to learn more robust features. Such a dropout layer is for example described in Nitish Srivastava, Geoffrey Hinton, Alex Krizhevsky, Ilya Sutskever, and Ruslan Salakhutdinov: Dropout: a simple way to prevent neural networks from overfitting, The journal of machine learning research, 15(1):1929-1958, 2014 and may have a drop probability p between 0.2 and 0.3, for example p=0.245. This layer is used only during training. The at least one further layer may further include fully connected layers which provides a dimensional expansion, where for example a first fully connected layer enlarges the features provided by the max pooling layer to a higher number of dimensions, for example between 1600 and 1800 dimensions, for example 1763 dimensions. This allows the artificial neural network to explore a broad spectrum of patterns within the point in time selected by the max pooling layer. In some embodiments, as a penultimate layer an exponential linear unit (ELU) may be provided which introduces non-linearity to the output, enabling the artificial neural network to handle complex relationships between the processed timestep and the target variable, i.e. the fixation distance. The at least one further layer may include a further fully connected layer downstream of the ELU decreasing the dimensionality, for example between 400 and 500, which may force the artificial neural network to robustly capture intricate patterns before making predictions.

Furthermore, in some embodiments between the LSTM and the max pooling layer a batch normalization layer may be provided which as described in Sergey Ioffe and Christian Szegedy. Batch normalization: Accelerating deep network training by reducing internal covariate shift. In International conference on machine learning, pages 448-456. pmlr, 2015. [Reference 53] to stabilize and accelerate learning by normalizing activations and an encoding layer may be provided. While these layers may improve the result, in other embodiments, some of these layers may also be omitted. In particular, the series of operations described downstream of the max pooling layer allow the artificial neural network to effectively distill and analyze the essence of the input data, which provides a high robustness to the trained artificial neural network.

The method preferably further comprises preprocessing the measurement data to generate the input data or training data, respectively. Through such a preprocessing, the measurement data may be optimized, and training and later inference may be improved.

Preferably, the preprocessing comprises removing outliers from the measurement data. This improves the input data or training data for subsequent processing.

Outliers, including anomalies, may be identified and eliminated through a removal process. For example, for training a rolling mean window (e.g. window size = 5, threshold = 10) may be employed for the target variable (i.e. fixation distance parameter) to detect context-specific, short-term anomalies that can occur due to input signal noise. Window size and threshold may also have other values, although the above values are currently preferred. This approach captures transient deviations from a mean value over time. For the features of the measurement data apart from the fixation distance parameter, both for training and inference, the Interquartile Range (IQR) method over the time dimension may be used to enhance data consistency. This method is described for example in HP Vinutha, B Poornima, and BM Sagar: Detection of outliers using interquartile range technique from intrusion dataset, Information and decision sciences: Proceedings of the 6th international conference on ficta, pages 511-518. Springer, 2018.

The IQR method is well suited to identify statistically rare events within the whole range of the features, capturing both short-term and long-term outliers. The window calculation process is formalized in Equations (1), (2), and (3). $GT_{depthi}$ represents the ground truth fixation distance parameter value at the i-th point in time in the measurement data, $W_i$ represent the window of values around $GT_{depthi}$, defined by a specified window size. For each $GT_{depthi}$ in the dataset, we define a window $W_i$ of values centered around *i,* with size *window$_{size}$.* The window is defined as:

$$W_i = \{GT_{depth_{start}}, \ldots, GT_{depth_{end}}\} \qquad (1)$$

where

$$start = \max\left( i - \frac{window_{size}}{2}, 0 \right) \qquad (2)$$

$$end = \min\left( i + \frac{window_{size}}{2} + 1, N \right) \qquad (3)$$

and $N$ is the total number of observations in the dataset of one person. $mean(W_i)$ represents the mean value of the ground truth depths within the window $W_i$, and $threshold$ represents the predefined threshold for outlier detection. The window's mean is then calculated with Equation (4). A value $GT_{depthi}$ is considered an outlier if the absolute difference between $GT_{depthi}$ and the mean of $W_i$ exceeds the threshold Equation (5).

$$mean(W_i) = \frac{1}{|W_i|} \Sigma_{j=start}^{end} GT_{depth_i} \qquad (4)$$

$$\text{Outlier if } \left| GT_{depth_i} - mean(W_i) \right| > threshold \qquad (5)$$

For removing data outliers of other features of the measurement data, as mentioned above the IQR method may be used. This technique involves computing the first ($Q1$) and third ($Q3$) quartiles for each feature or feature components (like x, y, z components) within the measurement data, with the IQR defined as the difference between these quartiles, as illustrated in Equation (6). Subsequently, outliers for each feature are identified and eliminated based on the criteria outlined in Equation (7). This operation is executed independently for each feaure to ensure the characteristics of each feature are adequately considered.

$$IQR = Q3 - Q1 \qquad (6)$$

$$Q1 - 1.5 \times IQR < df_{column} < Q3 + 1.5 \times IQR \qquad (7)$$

Here, df refers to a data frame, which encapsulates the entirety of the data of one person. For each feature or feature component, which may be seen as a column in the data frame $df$, denoted as $df_{column}$, we calculate $Q1$, $Q3$, and $IQR$ to establish the bounds for identifying outliers.

The 'mask' generated by Equation (7) is a boolean array specific to each feature or feature component, indicating which values fall outside the accepted range (defined by 1.5 times the IQR below $Q1$ and above $Q3$), thereby flagging them as outliers. This approach ensures that outlier detection and removal are tailored to the distribution of each feature, maintaining the integrity the dataset by selectively filtering outliers based on the statistical properties of individual columns. Data in the measurement data are considered outliers if they fall outside the range specified by this mask and are removed. Outliers can significantly skew statistical measures such as the mean, variance, and standard deviation, resulting in unreliable data representation. Removing outliers provides a more accurate depiction of the distribution, enhancing the reliability of these measures. While outliers are detected within small, moving windows, affecting only a localized subset of data points at a time, outliers are detected across the entire dataset, affecting global statistical measures. Smaller anomalies have a limited impact because they are transient and localized. Nevertheless, outliers can drastically shift the overall mean due to their extreme values relative to the rest of the data. Many machine learning models assume that the data follows a particular distribution, and outliers can violate these assumptions, leading to poor model performance. Therefore, outlier removal may improve accuracy and generalization of the (trained) artificial neural network. Outliers can also introduce noise into the dataset, which may confuse the artificial neural network during training. By removing outliers, this noise may be reduced, enabling the artificial neural network to focus on the underlying patterns in the data. Additionally, outliers can stem from data entry errors or anomalies in data collection. Identifying and removing these outliers prevents such errors from negatively impacting the analysis and conclusions. Removing outliers ensures that statistical test results are more robust and reflective of the actual data characteristics.

For training, the method may also comprise data balancing to divide the measurement data into a plurality of bins, each having a same number of samples, by resampling. To do in a preferred embodiment over- and undersampling are combined (as explained further below with respect to equation (10)) before binning the target variable (i.e. fixation depth). This process involved quantizing the target variable into predetermined number of bins, ensuring an equal distribution of samples across each bin. For example, if the measurement data is mainly spread across 0 to 600 cm as fixation depth, bins of 10 cm may be defined to ensure a balanced amount of samples for at least each 10 cm bin, resulting in 60 bins. The bin size may be chosen based on the visualization of the measurement data as a trade-off between covering a wide range of possible values for the fixation depth and having a substantive amount of representative samples for each bin. This strategy may ensure that the artificial neural network after training is not biased towards more frequently occurring data ranges. In a first step, we divide the fixation distance parameters, $GT_{depthi}$, into a predetermined number of bins ($N_{bins}$), where Bin() denotes the binning operation, and $N_{bins}$ = 60 in the numerical example above, see equation (8) below. Next, we calculate the mean count per bin $\overline{C}$ where $C_j$ is the count of samples in the j-th bin, equation (9). To ensure that each bin has a sample count close to the mean count $\overline{C}$, we perform resampling. For bin i, the resampled bin data, $D'_i$, is obtained using Equation (10), where $|Di|$ is the count of samples in bin $i$, and Resample($\cdot$) denotes the resampling operation. This process involves random oversampling or undersampling of each bin to match the mean count $\overline{C}$, Finally, the resampled bin data from all bins are concatenated to form a balanced dataset as described in Equation (11).

$$GT_{depth_{bin}} = Bin(GT_{depth}, N_{bins}) \qquad (8)$$

$$\overline{C} = \frac{1}{N_{bins}} \sum_{i=1}^{N_{bins}} C_i \quad (9)$$

$$D'_i = \begin{cases} Resample\ (D_i, replace = True, n = \lceil \overline{C} \rceil), if\ |D_i| < \overline{C} \\ Resample\ (D_i, replace = False, n = \lceil \overline{C} \rceil, if\ |D_i| > \overline{C} \\ D_{i,} \qquad\qquad otherwise \end{cases} \qquad (10)$$

$$Balanced\ dataset = \bigcup_{i=1}^{N_{bins}} D'_i \quad (11)$$

This binning and resampling process helps to address imbalances in the distribution of the fixation depth across the measurement data used for training. By ensuring each bin has a similar number of samples, we enhance the generalizability of the artificial neural network. This balanced approach reduces bias towards over-represented values, making predictions more accurate and fair. Additionally, it improves the performance across the range of the fixation depths by ensuring adequate representation of each data segment, leading to more reliable and consistent results.

Further for training, in some embodiments it is ensured that training data from a single person is only used for training, but data from this person is not for validation or testing of the trained artificial neural network later on. This is also referred to as "splitting", where measurement data for a plurality of persons may be split into the training data mentioned above, and further data used for validation and testing of the trained artificial neural network.

To incorporate the intricate risks of biophysical data, we also ensured the generalizability of our machine-learning model by employing a systematic approach to data splitting using the K-Fold cross-validation (K-Fold CV) technique in a person-wise manner. This method may be used for assessing the performance of the method and its ability to generalize to unseen data. We initialized the KFold cross-validator from the ScikitLearn library with a predetermined number of splits, *n_splits = number of subjects,* and set shuffle to True to randomize the data before splitting it. This effectively is a Leave-One-Out Cross Validation (LOOCV) approach as a particular case of KFold CV. The randomization is helpful for mitigating any potential bias stemming from the original ordering of the data. To ensure the reproducibility of our results, we fixed the random state parameter to 42

$$KFold\big(splits = n_{splits}, shuffle = True, random\ state = 42\big) \qquad (12)$$

To maintain the integrity of person data and avoid data leakage, we performed the splits based on unique persons in the dataset (person-wise splitting). This approach ensures that all data from a single person is exclusively in the training, validation, or testing data, which is helpful for evaluating the performance of the trained artificial neural network in real-world scenarios. We created splits for training and validation, again ensuring there was no overlap of persons between these sets. Inference is then done on unseen persons. This meticulous data splitting and validation approach is foundational for developing accurate and reliable machine learning models. By ensuring that the trained artificial neural networkl is tested on unseen data (i.e. data for validation and testing) in a manner that mimics real-world application scenarios, the generalizability and readiness for deployment may be verified. Moreover, person-based splitting guards against overfitting.

Preferably, the preprocessing comprises generating further features based on the features of the measurement data wherein the input data or training data, respectively, is also based on the further features. To summarize, the further features may comprise one or more items selected from the group consisting of:

- an eye vergence angle,
- an interpupillary distance,
- a vergence depth
- a cosine of the eye vergence angle,
- a binocular gaze offset,
- an angular difference between an angle in a horizontal direction of the first eye vector and an angle in the horizontal direction of the second eye vector,
- one or more gaze direction ratios between one of the first or second eye vector and a component of the other one of the first and second eye vector,
- one or both of velocity and acceleration of one or both of right eye and left eye,
- a ratio of change rates of components of the first and second eye vectors,
- a change of the vergence angle between different points in time,
- a difference between components of the first and second eye vectors,
- a ratio between corresponding components of the first and second eye vectors, and
- an angular difference in a horizontal direction of the first and second eye vectors.

Through using one or more of these further features, which are derived from the features, a precision of the determination of the fixation depth may be improved. The above features may be normalized, for example based on a magnitude of the eye vectors.

For training, further features may also be formed based on the fixation distance included in the measurement data for training.

Deriving the further features will now be explained in some more detail:
Based on sequences of a number of (in the example discussed below 10) temporally consecutive samples of the features of the measurement data, which include twelve coordinates (eye vector left and right (in x,y,z coordinates) and eye origin left and right in x,y,z coordinates, the predictive power of the method to determine the fixation distance parameter may be enhanced by deriving the further features from the 12 coordinates of the features mentioned above and, in case of training, optionally also from the fixation depth as target variable. The further features may be derived with respect to the optical axis. The further features listed above include ratios, differences, and higher-order dynamics of eye movements. In the following, we give an overview of the features and their meaning. Further below, the example calculations for the further features mentioned above are given.

The Eye Vergence Angle (EVA) or short vergence angle is helpful in understanding how the eyes adjust their lines of sight when focusing on an object. This angle results from both eyes' simultaneous inward or outward movement to maintain single binocular vision as they shift focus across objects at varying distances. EVA provides insights into the fixation distance parameter and the mechanisms underlying 3D perception. It is helpful for grasping the spatial dynamics of visual perception. The vergence angle between different persons may be normalized. Additionally, the conversion of EVA to a cosine metric may simplify some analyses. A feature derived from EVA, vergence depth, offers a quantifiable measure of the fixation distance parameter but provides the most reliable estimates only within a specific mid-range due to the nonlinear relationship between EVA and fixation distance and hence also between EVA and other possible fixation distance parameters.. However, as input to the artificial neural network it may improve the quality of the determination of the fixation depth.

Beyond the EVA, we analyze changes in eye vectors (EV) to illuminate eye alignment and focus disparities. This includes assessing differences in vector components between the eyes and calculating the Euclidean distance between focus points (intersections of the vectors) to determine the convergence or divergence in gaze. The directional magnitudes for each eye's gaze direction are compared to reveal potential asymmetries in eye movement strength. While the intersection of EVs on the z-axis can be informative about the focused depth, even slight inherent noise and errors in the estimation of the EVs can introduce high variation in depth estimation. This is one major problem that causes eye-tracking for depth perception to be not as reliable as needed, and which is overcome by using such further features for the input data of the artificial neural network, but not directly calculating the fixation distance parameter based on one of such further features.

Another group of further features can be described as ratios and differences. Here, we explore the ratio of directional magnitudes by dividing one eye's directional magnitude by the other's, giving information about eye movements and gaze focus asymmetries to the artificial neural network. Additionally, analyzing the magnitudes of individual dimensions by the artificial neural network may uncover insights into the relative orientations and dominance in gaze direction. The feature examining horizontal to vertical disparities in gaze may reveal preferred axes of movement or alignment. The quantification of eye movement rates - velocity and acceleration - may highlight the agility and speed at which eyes move. This is helpful for identifying rapid attention shifts or differentiating between types of eye movements, such as saccades and smooth pursuits. The relative change in EV captures temporal shifts in depth perception, examining how focus adapts to changing stimuli. Also angular differences between the eyes' gaze directions, may be exploited by the artificial neural network- The ratios of gaze direction components enable a normalized comparison of eye movement strengths and orientations, enriching data analysis by accounting for individual eye movement characteristics. Lastly, metrics concerning gaze point distance and depth difference are included, providing perspectives on the visual system's spatial positioning and depth perception capabilities, helpful for 3D visualization and AR applications.

The further features may be derived in some embodiments according to the following equations. Here, the first and second eye vectors are denoted $\vec{R}$ for the right eye and $\vec{L}$ for the left eye, with components $R_X$, $R_Y$ and $R_Z$ or $L_X$, $L_Y$ and $L_Z$, respectively. For the following discussion, it is assumed that $\vec{R}$ and $\vec{L}$ are normalized to 1, i.e. that $\| \vec{R} \|$ and $\| \vec{L} \|$ according to equations (13) and (14) below are equal to 1. In case a measurement device used provides non-normalized vectors $\vec{R}$ and $\vec{L}$, the vectors may be normalized by dividing $R_X$, $R_Y$ and $R_Z$ or $L_X$, $L_Y$ and $L_Z$ by $\| \vec{R} \|$ or $\| \vec{L} \|$, respectively.

$$\| \vec{R} \| = \sqrt{R_X^2 + R_Y^2 + R_Z^2} \qquad (13)$$

$$\| \vec{L} \| = \sqrt{L_X^2 + L_Y^2 + L_Z^2} \qquad (14)$$

As eye position, the right and left eye origins of the eye vectors are given in cartesian coordinates $X_R$, $Y_R$, $Z_R$ for the right eye and $X_L$, $Y_L$ and $Z_L$ for the left eye. Values like depth values below may be given in any unit, e.g. meters or centimetres, and may be converted between them. For some calculations such as velocity, acceleration, and angular differences sequential data points for sequential points in time are used, and their values depend on the temporal resolution of the data collected.

Interpupillary Distance (IPD): The IPD may be calculated as the Euclidean distance between the gaze origins of the right and left eyes:

$$IPD = \sqrt{\left(\Delta X_{R,L}\right)^2 + \left(\Delta Y_{R,L}\right)^2 + \left(\Delta Z_{R,L}\right)^2} \qquad (15)$$

where $\Delta X_{R,L}$, $\Delta Y_{R,L}$ and $\Delta Z_{R,L}$ are the differences in the $X$, $Y$ and $Z$ coordinates of the right and left eye gaze origins, respectively.

The magnitude (scalar) of eye vectors for the right and left eyes may be computed using the Euclidean norm: These are used also for further calculations below for eye trackers which assign different or varying magnitudes to the eye vectors.

The eye vergence angle (EVA) between the gaze directions of the right and left eyes may be calculated using the dot product:

$$VA = \arccos\left(\vec{R} \cdot \vec{L}\right) \qquad (16)$$

Normalizing the vergence angle between -1 and 1 provides a standardized scale for this feature, making the artificial neural network's learning process less sensitive to the absolute scale of the original angles. The normalized vergence angle may be calculated as:

$$VA_{normalized} = 2\left(\frac{VA - \min(VA)}{\max(VA) - \min(VA)}\right) - 1 \qquad (17)$$

Vergence Depth (VD) may be computed based on the vergence angle and the IPD, assuming a simple geometric model of eye vergence:

$$VD = \frac{IPD}{2\tan\left(\frac{VA}{2}\right)} \qquad (18)$$

A normalized depth for each observation may be calculated as

8

$$VD_{normalized} = \frac{VD - \min(VD)}{\max(VD - \min(VD))} \qquad (19)$$

with min and max being operation determine the minimum and maximum of a sequence of the points in time, respectively.

The cosine of vergence angles, derived from the eye vergence angle data, represents the orientation difference between the gaze directions of the two eyes. This further feature is helpful because it captures the degree of alignment or disparity between the eyes' focus, which can indicate depth perception and the point of focus in 3D space. The cosine of the vergence angle is calculated as:

$$Cosine\ Angles = \cos(VA) \quad (20)$$

Binocular gaze offset may be calculated as the Euclidean distance between the directions of the right and left eyes using their X and Y components. This distance can indicate how convergent or divergent the gaze is, which, like the vergence angle, relates to depth perception and focus. The Euclidean distance between the gaze points of the right and left eyes is computed as:

$$POR_{Distance} = \sqrt{(R_X - L_X)^2 + (R_Y - L_Y)^2} \qquad (21)$$

where $R_X$ represents the gaze direction of the right eye in the *x* direction.

Ratio of Change rates of components of the eye vectors between timesteps t and t-1:

$$Ratio_{X,Y} = \frac{\Delta X_{t,t-1}}{\Delta Y_{t,t-1}} \qquad (22)$$

The change in vergence angle over time (or between sequential observations), here between timesteps t and t-1:

$$VA_\Delta = V_t - V_{t-1} \quad (23)$$

Binocular Gaze Point Depth Difference

The difference in depth (Z-coordinate) between the right and left gaze points:

$$Gaze\ Point\ Depth\ Difference = R_Z - L_Z \quad (24)$$

Ratios of Gaze Direction Components *Ratio D$_X$, Ratio D$_Y$, Ratio D$_Z$*, i.e. the ratios of corresponding components of the eye vectors for the right and left eyes:

$$Ratio\ D_X = \frac{R_X}{L_X} \quad (25)$$

$$Ratio\ D_Y = \frac{R_Y}{L_Y} \quad (26)$$

$$Ratio D_Z = \frac{R_Z}{L_Z} \quad (27)$$

Velocity and Acceleration, i.e. the rate of change (velocity) and the rate of change of the rate of change (acceleration) in a given component (e.g., X) of the gaze direction

$$Velocity_X = X_t - X_{t-1} (28)$$

$$Acceleration_X = Velocity_{X_t} - Velocity_{X_{t-1}} \quad (29)$$

Angular Difference in a horizontal direction, i.e.the difference in the X-component (horizontal) of the angular gaze direction between the right and left eyes:

$$Angular\ Difference_X = \theta_{R,X} - \theta_{L,X} \qquad (30)$$

While a plurality of further features is discussed above which alone or in combination may enhance the quality of determination of the fixation distance parameter, in other embodiments only some of these further features or none of the further features may be used. In particular, as the further features are derived from the features, also by using only the features and not the further features all information is provided to the artificial neural network, but providing the further features may assist the network.

The method may further comprise a normalizing of the features of further features above. This may be a simple normalization of vectors according to their norms (e.g. Euclidian norm). Furthermore, a normalization (also referred to as global normalization herein) may be performed based on distribution parameters of a training set used for training the artificial neural network. This means that a training, a distribution of the training data may be determined, and a normalization may be performed based on this distribution. This normalization is also referred to as global normalization herein. Furthermore, a person-wise normalization may be performed, which comprises normalizing at least one of the features or further features based on distribution parameters of the respective feature or further feature in a respective sequence (in the training sequence for training, in the sequence for inference) for a single person. This will be explained in more detail below.

Normalization according to such embodiments may therefore be applied in two steps to a dataset D (measurement data and also data derived therefrom, i.e. the above further features), a first step being the global normalization and a second step being the person-wise normalization mentioned above. In other embodiments, only one of these steps may be performed. Such a normalization is particularly useful in scenarios where data comes from multiple persons, each potentially with different baselines or scales of measurement. Given a dataset D for multiple persons, the two-step normalization process involves applying global normalization to $D$ see equation (35), obtaining $D_{global\_norm}$, and then for each person in $D_{global\_norm}$, applying person-wise normalization to obtain the final normalized dataset $D_{final\_norm}$ see equation (36). The normalization per person is to account for individual variations, ensuring the artificial neural network learns generalized patterns rather than person-specific characteristics.

The global normalization process in some embodiments applies a Robust Scaler as described in David C Hoaglin, Frederick Mosteller, and John W Tukey: Understanding robust and exploratory data analysis, volume 76. John Wiley & Sons, 2000 to the features of the dataset, excluding specific features such as the fixation depth (GT Depth) in the measurement data for training. This scaling technique is particularly effective in datasets with outliers, as it uses the interquartile range for scaling, thereby reducing the influence of extreme values such as outliers. Given a feature vector $X = [x_1, x_2, ...x_n]$ the Robust Scaler transforms $X$ into $X'$ by computing:

$$X' = \frac{X - Median(X)}{IQR(X)} \qquad (31)$$

where Median(X) is the median of the feature values in $X$, $IQR(X)$ is the Interquartile Range of $X$, calculated as $IQR(X) = Q3(X) - (Q1(X)$ with $Q3(X)$ and $Q1(X)$ representing the third and first quartiles of $X$, respectively (see above explanations for outlier removal). The transformed dataset $D'$ then contains the normalized features $X'$. We use a scaler that is robust to outliers generated during the data processing, for example caused by data processing after the removal of outliers described above, to ensure stability and robustness in our preprocessing pipeline, accounting for any residual outliers, future data variations, and skewed distributions. For global normalization, the statistics (median and IQR) are calculated using the training set. These statistics are then applied to normalize the data for inference (features and further features), ensuring that the normalization process is consistent and does not introduce data leakage. Even after removing outliers, global normalization may be helpful because it ensures that the overall scale of the data is consistent, making the dataset more robust to variations. The global normalization step adjusts the data on a broader scale, ensuring that features from different persons and conditions are comparable. This step is helpfull to avoid biases in the training process caused by different feature scales.

In the person-wise normalization, data is further normalized on a per-person basis after global normalization. This step accounts for individual differences, ensuring that the artificial neural network does not learn from these variations but from the underlying patterns. For a person $s$ with data $X'_s$ person-wise normalization is applied as:

$$X'_{s,normalized} = \frac{Xt_s - Median(X'_s)}{IQR(X'_s)} \qquad (32)$$

Person-wise normalization is calculated and applied directly to each person's data, ensuring that intra-person variability is appropriately handled. By combining these two normalization steps, it may be ensured that the artificial neural network is trained on data that is both globally and individually normalized, enhancing its generalizability. This process is repeated for each unique person in the dataset, ensuring individual data scales are aligned. Especially in physiological or behavioral data, measurements can significantly differ between persons due to innate individual differences. Person-wise normalization helps in handling inter person variability. It further improves generalization by ensuring that the artificial neural network learns from normalized features, allowing it to better generalize across persons not part of the training data. Another aspect is a fair comparison. It ensures that features from different persons are on a comparable scale, making statistical analysis and machine learning modeling more effective and fair.

The preprocessing may further comprise transforming at least one of the features or further features to approximate a predefined distribution like a Gaussian distribution (also referred to as normal distribution). This transformation is also referred to as feature transformation.

Feature transformations may help that each feature or further feature in the dataset is transformed to achieve a more normal distribution, supporting the assumptions of many machine-learning algorithms and improving overall performance as described in George EP Box and David R Cox: An analysis of transformations, Journal of the Royal Statistical Society:Series B (Methodological), 26(2):211-243, 1964. Different mathematical transformations are tested on the training dataset for each feature to achieve a distribution closer to normal distribution characteristics, which can improve the performance of specific machine-learning models. While normalization typically scales the data to a standard range or distribution, it does not necessarily transform the data to follow a Gaussian distribution. Therefore, applying transformations such as logarithmic, square root, or Box-Cox (see citiation above) may be performed to address skewness and other distributional issues that normalization alone cannot resolve. The ideal transformation minimizes the distance to the normal distribution characteristics defined by skewness and kurtosis. Skewness measures the asymmetry of the data distribution, with an ideal skewness of 0 indicating a perfectly symmetrical distribution. Kurtosis measures the tailedness of the distribution, with an ideal kurtosis of 3 indicating a normal distribution. Transforming the data to be more Gaussian-like (normal distribution) can support faster convergence in machine learning models and improve their performance and accuracy. This step accounts for generalizability and robustness, too. As mentioned, machine learning algorithms often assume that input data follows a normal distribution. Skewed data or data with extreme kurtosis can lead to biases in model training and prediction errors. Addressing these issues helps create more robust models. For specific statistical models (like linear regression), meeting normality assumptions leads to more reliable and interpretable estimates. Transforming features to have similar distributions also makes them more comparable and more accessible to visualize, facilitating better understanding and interpretation. To determine the best transformation, in some embodiments the following steps may be applied:

1) Calculate Original Skewness and Kurtosis: For each feature in the dataset, calculate the original skewness and kurtosis.
2) Apply Transformations: Apply predefined transformation techniques (e.g., log transformation, square root transformation, Box-Cox transformation) to each feature.
3) Evaluate Transformations: Calculate the resulting skewness and kurtosis for each transformed feature for each transformation.
4) Compute Distance Metric: Compute a distance metric for each transformation, measuring how far the transformed data's skewness and kurtosis are from the ideal values (skewness = 0, kurtosis = 3).
5) Select Best Transformation: The transformation that minimizes the distance metric is considered the best for that feature.
6) Save Best Transformation: Save the best transformation for each feature to apply the same transformation to the validation dataset. The approach of transforming features to achieve a normal distribution is well-documented in the literature. Box and Cox's transformation (see citation above) is a commonly used method to stabilize variance and make the data more normally distributed. Similarly, Jason W Osborne: Improving your data transformations: Applying the box-cox transformation, in Practical Assessment, Research,and Evaluation,15(1):12, 201 discusses improving data transformations for statistical analysis. These transformations are standard procedures in data preprocessing aimed at enhancing the robustness and accuracy of machine learning models.

For training, additionally the fixation depth used as a ground truth variable may be scaled to align with the features or further features. During inference, the scaling may then be reversed for the fixation distance parameter output by the artificial neural network.

This may also improve the performance and stability of machine learning models used. To achieve this, we rescale the fixation depth to align with the features and/or further features provided for training. Rescaling ensures that the output values of the artificial neural network are within a comparable range to the input features, facilitating faster convergence during training. Significant discrepancies between the scales of input features and target values can lead to inefficient optimization processes and slow convergence rates. Working with a wide range of target values can introduce numerical instabilities, particularly in gradient-based optimization methods. By rescaling the target values to a smaller, more manageable range, we mitigate these instabilities and promote a more stable training process. Maintaining consistency in the scaling of input features and target variables helps the artificial neural network learn the relationships between inputs and outputs more effectively. This consistency can result in more accurate predictions and better generalization to unseen data. Rescaling target variables like the fixation depth is a standard practice in machine-learning, especially in regression tasks. It ensures that the loss function operates within a consistent scale, which is helpful for effective training. To ensure that the predictions of the artificial neural network are interpretable in the context of the original data, the scaler used during the training process is saved. This saved scaler is then used to apply an inverse transformation to the predictions of the fixation depth output by the artificial neural network during inference. In other words, during the training process, the fixation depth as target variable is scaled to improve performance and training stability. However, once the artificial neural network generates predictions, these predictions are in the scaled form. To interpret these predictions correctly, we need to convert them back to the original scale of the target variable. After obtaining the artificial neural network's predictions of the fixation distance parameter on the test set or new data, we apply the inverse transformation to convert them back to the original scale. This process involves using the saved scaler to reverse the scaling operation applied during Training. For example, the fixation distance parameter may be the fixation distance itself. In this case, the fixation distance may be initially measured in centimeters, with values ranging from 0 to around 900 cm, corresponding to a depth perception range from 0.0 to 9 meters based on the typical eye vergence range. To standardize this range and make it more manageable for computational purposes, the target variable is scaled to a range of 0 to 1000 cm using a MinMax Scaler transformation. This transformation adjusts the values of the target variable to the specified range [0, 1000]. The transformation for a value y of the fixation distance parameter in the original measurement data to the scaled value y' is given by:

$$y' = a + \frac{(y - y_{min}) \times (b - a)}{y_{max} - y_{min}} \qquad (33)$$

where $y_{min}$ and $y_{max}$ are the minimum and maximum values of the target variable in the training dataset, respectively, and a and b are the bounds of the new scaling range, with a = 0 and b = 1000 in our case. We chose the 0 to 1000 range as an example to encompass a depth perception range of 0 to 10 meters, considering that eye movements can change depth perception up to approximately 10 meters, beyond which it is considered infinity. This range ensures that the artificial neural network is prepared for all kinds of data that might be fed into it in the future, including maximum depth perception scenarios. During development, the MinMax Scaler performed better than typical scaling methods by preserving the relative distances between data points and improving the performance. The 0 to 1000 range, while larger than the original scale, ensures that the scaled values are standardized and more suitable for various computational operations and visualizations.

From the data thus preprocessed, a sequence of a certain length is used, i.e. a certain number of points in time, for training, to capture temporal dependencies within the eye movement data. This approach ensures that the temporal context is preserved, which is helpful for training the artificial neural network on sequential data where the order and timing of observations are important. Given a dataset D organized by person, the process first divides the dataset into subsets $D_s$, each corresponding to a unique person s, ensuring that sequences are generated within individual person data. We generate sequences for a defined sequence length L by sliding a window of length L across each person's data. This means that the sequences overlap, as each new sequence starts one time step after the previous one. For each position n within the data for person s, a sequence $S_n$ and its corresponding fixation distance parameter as target $y_n$ are defined as

$$S_n = \{X_n, X_{n+1,...,}X_{n+L-1}\} \qquad (34)$$

$$y_n = y_{n+L} \qquad (35)$$

where $X_n$ represents the feature vector at time step n, and $y_{n+L}$ is the fixation distance parameter value immediately following the sequence. This overlapping sequence generation helps that temporal dependencies are effectively captured, providing the artificial neural network with sufficient context for learning.

For training, the artificial neural network may be trained using conventional training functions like built-in functions for backpropagation and optimization of PyTorch. In an embodiment, NumPy may be used to handle data arrays and perform numerical operations, while SciPy may be used to provide additional mathematical and statistical functions for preprocessing and evaluation. The training process may involves several components: The choice of an optimizer is important for the learning efficiency and convergence of the artificial neural network. As an example, Adam W as described in Ilya Loshchilov and Frank Hutter: Decoupled weight decay regularization, arXiv preprint arXiv:

1711.05101, 2017 may be used, although other optimizers may also be employed. As loss function, a smooth L1 loss as described in Cheng-Yang Fu, Mykhailo Shvets, and Alexander C Berg. Retinamask: Learning to predict masks improves state-of-the-art single-shot detection for free, arXiv preprint arXiv:1901.03353, 2019 with beta=0.75 may be used. Beta has been defined empirically by a hyperparameter search.

The Smooth L1 Loss function minimizes prediction errors while balancing the mean absolute error and mean squared error. It is a robust loss function less sensitive to outliers compared to the L2 Loss and has been shown to prevent exploding gradients as described in Shaoqing Ren, Kaiming He, Ross Girshick, and Jian Sun: Faster r-cnn: Towards real-time object detection with region proposal networks, IEEE transactions on pattern analysis and machine intelligence, 39(6):1137-1149, 2016. It behaves like the L1 Loss when the absolute value of the argument is high and the L2 Loss when the absolute value is small. The loss function is defined as follows, with a beta parameter ($\beta$) controlling the transition:

$$L_{smooth}(y, \hat{y}) = \begin{cases} 0.5 \times \frac{(y-\hat{y})^2}{\beta} & if\ |y-\hat{y}| < \beta \\ |y-\hat{y}| - o.5 \times \beta & otherwise \end{cases} \quad (36)$$

The artificial neural network is trained on n-1 persons and validated/tested on the one left-out person, ensuring a rigorous evaluation of its generalization capability. As an example, each fold may be trained in n=2000 epochs with a batch size of 460, a weight decay of 0.0906, a learning rate of 0.033, a dropout rate of 0.245, an embedded dimension of 1435, and a fully connected dimension of 1763. However, these numbers serve merely as examples, and other numbers may also be used.

In inference, the scaling of the target variable is inverted to interpret the output of the artificial neural network in the original scale as described above. Performance metrics are then saved for each fold of the cross-validation process. After all folds, the average performance metrics are calculated and reported, providing a comprehensive overview of the effectiveness across the entire dataset. Tests showed a high accuracy of the estimation of the fixation distance parameter by this method.

Additionally, a computer device comprising at least one processor configured to execute any of the methods mentioned above, may be provided. A system including such a computer device and a measurement device for obtaining the measurement data, for example an eye tracker, is also provided.

Generally, as computer device, any device capable of transforming the processing, for example an embedded system, a microcontroller, a computer, a smartphone or the like may be used.

Additionally, a computer program, which, when executed on at least one processor, causes execution of any of the above methods is provided. The computer program may be provided on a storage medium, in particular on a tangible storage medium (e.g. flash drive, harddisk, read-only memory, etc.). A data carrier signal carrying the computer program is also provided.

Additionally, autofocus spectacles are provided including such a system provided at a spectacle frame, and autofocal glasses with adjustable focal length, where the focal length of the glasses is controlled based on the fixation distance parameter determined by the system. The autofocal glasses may be implemented as mentioned in the background portion above.

The embodiments explained above are summarized below.

According to an aspect, a computer-implemented method for determining a fixation distance parameter of a person is provided, comprising:

- receiving a sequence of measurement data for a plurality of points in time, wherein the measurement data for each point in time includes the following features: a position of a right eye of the person, a first eye vector indicative of an orientation of the right eye of the person, a position of a left eye of the person and a second eye vector indicative of an orientation of the left eye of the person, and

- providing input data based on the measurement data to an artificial neural network, wherein the artificial neural network is trained to provide the fixation distance parameter based on the input data,

characterized in that
the measurement data is given in a coordinate system of a measurement device used for obtaining the measurement data, and the measurement data is uncalibrated with respect to the person and with respect to a world coordinate system.

The artificial neural network may comprise a Long-Short Term Memory network.

The artificial neural network may further comprise a Max Pooling layer downstream of the Long-Short Term Memory network trained to select data associated with a point in time of the sequence.

The artificial neural network may further comprise at least one further layer downstream of the Max Pooling layer to determine the fixation distance parameter based on the selected data.

The method may further comprise preprocessing the measurement data to generate the input data.

The preprocessing may comprise removing outliers from the measurement data.

The preprocessing may comprise generating further features based on the measurement data, wherein the input data is based on the further data, wherein the further data comprises one or more items selected from the group consisting of:

- an eye vergence angle,
- an interpupillary distance,
- a vergence depth,
- a cosine of the eye vergence angle,
- a binocular gaze offset,
- an angular difference between an angle in an horizontal direction of the first eye vector and an angle in the horizontal direction of the second eye vector,
- one or more gaze direction ratios between one of the first or second eye vector and a component of the other one of the first and second eye vector,
- one or both of velocity and acceleration of one or both of right eye and left eye,
- a ratio of change rates of components of the first and second eye vectors,
  a change of the vergence angle between different points in time,
- a difference between components of the first and second eye vectors,
- a ratio between corresponding components of the first and second eye vectors,
- an angular difference in a horizontal direction of the direction of the first and second eye vectors,
  a binocular gaze point depth difference.

The preprocessing may comprise normalizing at least one of the features and the further features.

The normalizing may comprise normalizing the at least one of the features and the further features based on distribution parameters of a training set used for training the artificial neural network.

The normalizing may also comprise normalizing the at least one of the features and the further features based on distribution parameters of the respective feature or further feature in the sequence.

The preprocessing may comprise transforming at least one of the features or further features to approximate a predefined distribution.

According to another aspect, a computer-implemented method for training an artificial neural network for determining a fixation distance parameter of a person is provided, comprising:

- receiving a plurality of training sequences for a plurality of persons of measurement data for a plurality of points in time, wherein the measurement data for each point in time includes the following features: a position of a right eye of the respective person, a first eye vector indicative of an orientation of the right eye of the respective person, a position of a left eye of the respective person and a second eye vector indicative of an orientation of the left eye of the respective person, and a fixation distance parameter of the respective person, and
- providing training data based on the measurement data to an artificial neural network, to train the artificial neural network, wherein the fixation distance parameter is used as ground truth,

characterized in that

the measurement data is given in a coordinate system of a measurement device used for obtaining the measurement data, and the measurement data is uncalibrated with respect to the person and with respect to a world coordinate system.

The artificial neural network may comprise a Long-Short Term Memory network.

The artificial neural network may comprise a Max Pooling layer downstream of the Long-Short Term Memory network trained to select data associated with a point in time of the sequence.

The artificial neural network may comprise at least one further layer downstream of the Max Pooling layer to determine the fixation distance parameter based on the selected data.

The method may further comprise preprocessing the measurement data to generate the input data.

The preprocessing may comprise removing outliers from the measurement data.

The preprocessing may comprise generating further features based on the measurement data, wherein the input data is based on the further data, wherein the further data comprises one or more items selected from the group consisting of:

- an eye vergence angle,
- an interpupillary distance,

- a vergence depth,
- a cosine of the eye vergence angle,
- a binocular gaze offset,
- an angular difference between an angle in a horizontal direction of the first eye vector and an angle in the horizontal direction of the second eye vector,
- one or more gaze direction ratios between one of the first or second eye vector and a component of the other one of the first and second eye vector,
- one or both of velocity and acceleration of one or both of right eye and left eye,
- a ratio of change rates of components of the first and second eye vectors,
- a change of the vergence angle between different points in time,
- a difference between components of the first and second eye vectors,
- a ratio between corresponding components of the first and second eye vectors,
- an angular difference in a horizontal direction of the direction of the first and second eye vectors, and
    a binocular gaze point depth difference.

The preprocessing may comprise normalizing at least one of the features and the further features.

The normalizing may comprise normalizing the at least one of the features and the further features based on distribution parameters of the measurement data.

The preprocessing may comprise determining normalization parameters based on the distribution parameters for normalization preprocessing during inference.

The normalizing may comprise normalizing the at least one of the features and the further features based on distribution parameters of the respective feature or further feature in the sequence.

The preprocessing may comprise transforming at least one of the features or further features to approximate a predefined distribution.

The preprocessing comprises data balancing to divide the measurement data into a plurality of bins, each bin having a same number of samples, by resampling.

According to another aspect, a computer program is provided comprising program code which, when executed on a processor, causes execution of any of the methods above.

According to another aspect, a computer program stored on a non-transitory tangible storage medium (e.g. flash drive, harddisk, read only memory, etc.) is provided comprising instructions which, when carried out by a computer, cause the computer to carry out any of the methods described above.

According to another aspect, a data processing system is provided comprising a processor and a storage medium coupled to the processor, wherein the processor is adapted to perform the following steps based on a computer program stored on the storage medium:

- receiving a sequence of measurement data for a plurality of points in time, wherein the measurement data for each point in time includes the following features: a position of a right eye of the person, a first eye vector indicative of an orientation of the right eye of the person, a position of a left eye of the person and a second eye vector indicative of an orientation of the left eye of the person, and
- providing input data based on the measurement data to an artificial neural network, wherein the artificial neural network is trained to provide the fixation distance parameter based on the input data,

characterized in that
the measurement data is given in a coordinate system of a measurement device used for obtaining the measurement data, and the measurement data is uncalibrated with respect to the person and with respect to a world coordinate system.

According to another aspect a computer device is provided, comprising at least one processor configured to:

- receive a sequence of measurement data for a plurality of points in time, wherein the measurement data for each point in time includes the following features: a position of a right eye of the person, a first eye vector indicative of an orientation of the right eye of the person, a position of a left eye of the person and a second eye vector indicative of an orientation of the left eye of the person, and
- provide input data based on the measurement data to an artificial neural network, wherein the artificial neural network is trained to provide the fixation distance parameter based on the input data,

characterized in that
the measurement data is given in a coordinate system of a measurement device used for obtaining the measurement data, and the measurement data is uncalibrated with respect to the person and with respect to a world coordinate system.

The processor may be configured to perform any of the methods described above.

According to another aspect, a system is provided, comprising:

> the computer device as described above, and
> a measurement device configured to obtain the measurement data.

According to another aspect, autofocus spectacles are provided, comprising:

> a spectacle frame,
> autofocal glasses with adjustable focal length in the spectacle frame, and the system described above,
> wherein the autofocus spectacles are configure to control a focal length of the autofocal glasses based on the fixation distance parameter determined by the system.

Preferred embodiments will now be described referring to the attached drawings, wherein:

Fig. 1 is a block diagram of a system according to an embodiment,

Fig. 2 is a flow chart illustrating a method according to an embodiment,

Fig. 3 is a diagram of an autofocus spectacle according to an embodiment, and

Fig. 4 is a diagram showing an artificial neural network usable in some embodiments.

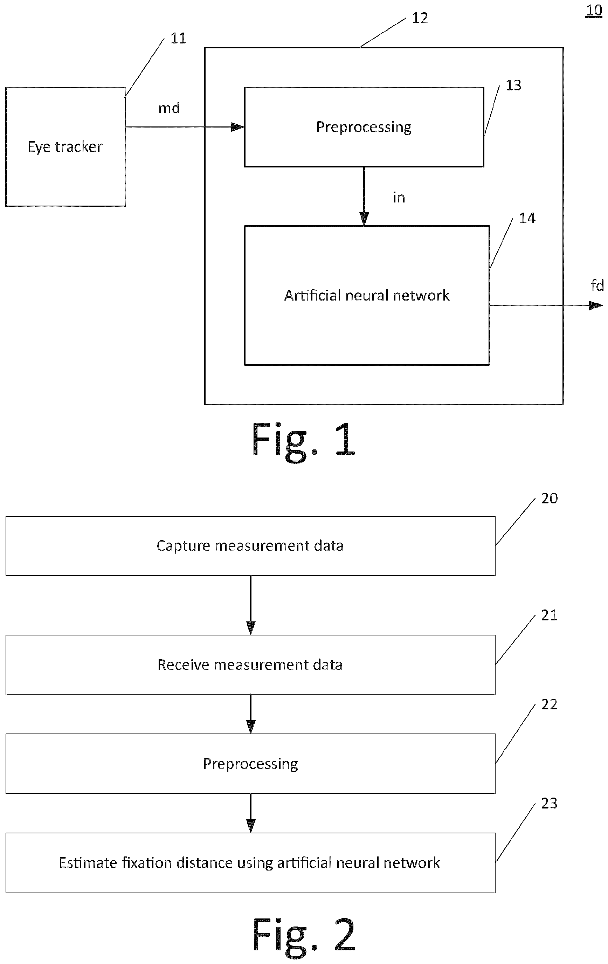

Fig. 1 illustrates a block diagram of a system 10 according to an embodiment. The system of Fig. 1 comprises an eye tracker 11 as a measurement device, which delivers measurement data md to a computer device 12. Computer device 12 includes one or more processors programmed to process measurement data md.

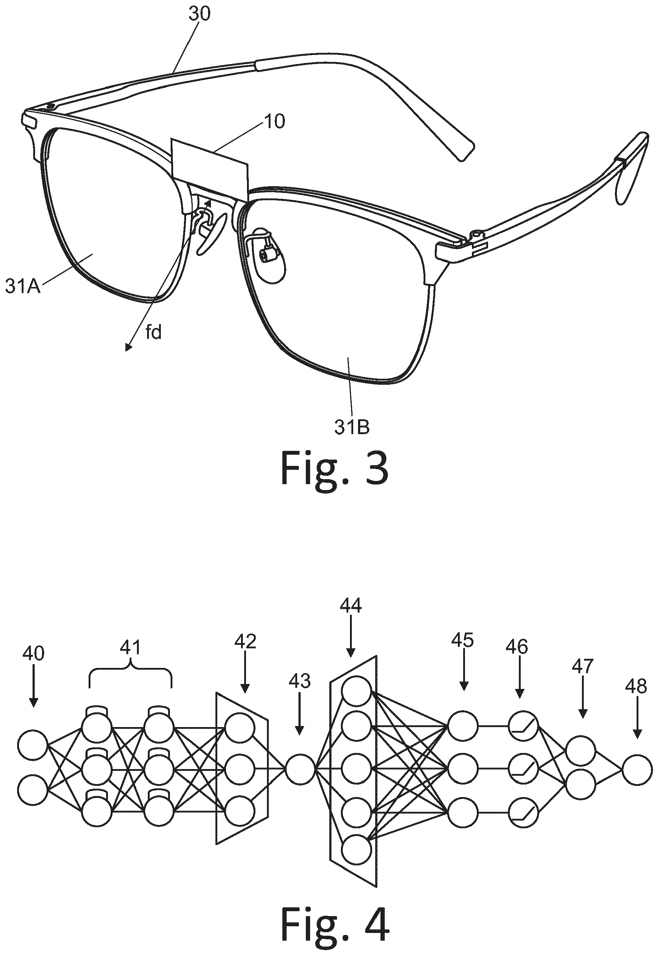

During use of system 10 in an application, the measurement data md includes the following features: a position of a right eye of a person, a first eye vector indicative of an orientation of the right eye of the person, a position of a left eye of the person and a second eye vector indicative of an orientation of the left eye of the person. System 10 or at least eye tracker 11, as will be shown below with respect to Fig. 3, may be mounted to a device wearable on the head of the person, for example a spectacle frame.

Measurement data md is provided to computer device 12. Computer device 12 is programmed to perform preprocessing 13 of the measurement data and to provide the preprocessed data as input data in to a trained artificial neural network 14, as explained above. Artificial neural network 14 outputs the fixation distance fd of the person as fixation distance parameter.

Computer device 12 may be provided in a same apparatus as eye tracker 11 or may also be provided remotely, and measurement data MD may for example be transmitted in a wireless manner. The fixation distance output may then be transmitted back to a device including eye tracker 11. For example, the computer device may be a smartphone carried by the person which serves as computer device, and eye tracker 11 communicates with this smartphone for example via Bluetooth.

The measurement data md is uncalibrated with respect to the specific person, with respect to daytime and with respect to some world coordinate system.

Fig. 2 is a flowchart illustrating a method according to an embodiment, which for better understanding will be described in conjunction with the system of Fig. 10. At step 20, the method comprises capturing measurement data, as explained for eye tracker 11 of Fig. 1. At step 21, the measurement data is received at a computer device like computer device 12. The computer device 12 then performs preprocessing as described above at step 22 and estimates the fixation distance as an example for a fixation distance parameter using an artificial neural network, for example artificial neural network 14 of Fig. 1, at step 23.

Fig. 3 illustrates autofocus spectacles according to an embodiment. Autofocal glasses 31A, 31B as described above are mounted to a spectacle frame 30. System 10 is provided to spectacle frame 30 to measure the fixation distance fd of one or more objects fixated by a person wearing spectacle frame 30. Computer device 12 of system 10 then controls autofocal glasses 31A, 31B to change their focus corresponding to the fixation distance and refraction data of the person, for to compensate for ametropia like myopia, presbyopia, or the like.

Fig. 4 shows an embodiment of a structure of an artificial neural network usable as artificial neural network 14 in Fig. 1 or as artificial neural network in step 23 of Fig. 2. The number of neurons and layers shown in Fig. 4 is only for ease of representation, and typically layers include significantly more neurons as explicitly shown in Fig. 4.

Artificial neural network 14 in Fig. 4 includes an input layer 40 for receiving the input data. Input layer 40 is followed by a Long Short-Term Memory network 41. This is followed by an encoding layer 42 which encodes the data provided to a max pooling layer 33. Max pooling layer 43 selects data associated with a specific point in time, which is expanded by a decoder 42 and further processed by a hidden layer 46 followed by an exponential linear unit 46 and a further hidden layer 47. An output cell 48 outputs the fixation distance as an example for a fixation distance parameter. The function of the layers is as described above, and as also described above further layers may be provided.

**Claims**

1. A computer-implemented method for determining a fixation distance parameter (fd) of a person, comprising:

- receiving a sequence of measurement data (md) for a plurality of points in time, wherein the measurement data (md) for each point in time includes the following features: a position of a right eye of the person, a first eye vector indicative of an orientation of the right eye of the person, a position of a left eye of the person and a second eye vector indicative of an orientation of the left eye of the person, and
- providing input data (in) based on the measurement data (md) to an artificial neural network (14), wherein the artificial neural network (14) is trained to provide the fixation distance parameter (fd) based on the input data (in),

**characterized in that**
the measurement data (md) is given in a coordinate system of a measurement device used for obtaining the measurement data (md), and the measurement data (md) is uncalibrated with respect to the person and with respect to a world coordinate system.

2. The method of claim 1, **characterized in that** the artificial neural network (14) comprises a Long-Short Term Memory network (41).

3. The method of claim 2, **characterized in that** the artificial neural network (14) comprises a Max Pooling (43) layer downstream of the Long-Short Term Memory network trained to select data associated with a point in time of the sequence.

4. The method of claim 3, **characterized in that** the artificial neural network (14) comprises at least one further layer (44-47) downstream of the max pooling layer to determine the fixation distance parameter (fd) based on the selected data.

5. The method of any one of claims 1 to 4, **characterized in that** the method further comprises preprocessing (13) the measurement data (md) to generate the input data (in).

6. The method of claim 5, **characterized in that** the preprocessing (13) comprises generating further features based on the measurement data (md), wherein the input data (in) is based on the further data, wherein the further data comprises one or more items selected from the group consisting of:

- an eye vergence angle,
- an interpupillary distance,
- a vergence depth,
- a cosine of the eye vergence angle,
- a binocular gaze offset,
- an angular difference between an angle in a horizontal direction of the first eye vector and an angle in the horizontal direction of the second eye vector,
- one or more gaze direction ratios between one of the first or second eye vector and a component of the other one of the first and second eye vector,
- one or both of velocity and acceleration of one or both of right eye and left eye,
- a ratio of change rates of components of the first and second eye vectors,
a change of the vergence angle between different points in time,
- a difference between components of the first and second eye vectors,
- a ratio between corresponding components of the first and second eye vectors,
- an angular difference in a horizontal direction of the direction of the first and second eye vectors,
a binocular gaze point depth difference.

7. The method of claim 5 or 6, **characterized in that** the preprocessing (13) comprises normalizing at least one of the features and the further features.

8. The method of claim 7, **characterized in that** the normalizing comprises normalizing the at least one of the features and the further features based on distribution parameters of a training set used for training the artificial neural network (14).

9. The method of claim 7 or 8, **characterized in that** the normalizing comprises normalizing the at least one of the features and the further features based on distribution parameters of the respective feature or further feature in the sequence.

10. The method of any one of claims 5 to 9, **characterized in that** the preprocessing (13) comprises transforming at least one of the features or further features to approximate a predefined distribution.

11. A computer program comprising program code which, when executed on a processor, causes execution of the method of any one of claims 1 to 10.

12. A computer device (12), comprising at least one processor configured to:

    - receive a sequence of measurement data (md) for a plurality of points in time, wherein the measurement data (md) for each point in time includes the following features: a position of a right eye of the person, a first eye vector indicative of an orientation of the right eye of the person, a position of a left eye of the person and a second eye vector indicative of an orientation of the left eye of the person, and
    - provide input data (in) based on the measurement data (md) to an artificial neural network (14), wherein the artificial neural network (14) is trained to provide the fixation distance parameter (fd) based on the input data (in),

    **characterized in that**
    the measurement data (md) is given in a coordinate system of a measurement device used for obtaining the measurement data (md), and the measurement data (md) is uncalibrated with respect to the person and with respect to a world coordinate system.

13. The computer device (12) of claim 12, wherein the processor is configured to perform the method of any one of claims 1 to 10.

14. A system (10), comprising:

    the computer device (12) of claim 12 or 13, and
    a measurement device configured to obtain the measurement data (md).

15. Autofocus spectacles

    a spectacle frame (30),
    autofocal glasses (31A, 31B) with adjustable focal length in the spectacle frame, and the system of claim 14, wherein the autofocus spectacles are configure to control a focal length of the autofocal glasses (31A, 31B) based on the fixation distance parameter (fd) determined by the system (10).

Fig. 1

Fig. 2

Fig. 3

Fig. 4

Europäisches
Patentamt

European
Patent Office

Office européen
des brevets

# EUROPEAN SEARCH REPORT

**Application Number**

**EP 24 19 2123**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 11 238 340 B1 (ANDERSON ALEXANDER GRANT [US] ET AL) 1 February 2022 (2022-02-01) * column 5, lines 39-49 - column 24 * ----- | 1-15 | INV. G06F3/01 |
| Y | US 2019/369719 A1 (KLINGSTRÖM ANDREAS [SE] ET AL) 5 December 2019 (2019-12-05) * paragraph [0091]; figure 5 * ----- | 1-14 | |
| Y | US 2021/166034 A1 (PETERSSON JON VOETMANN [DK] ET AL) 3 June 2021 (2021-06-03) * paragraph [0138] * ----- | 3-5 | |
| Y | JP 2022 123612 A (KONICA MINOLTA INC) 24 August 2022 (2022-08-24) * claim 1; figure 1 * ----- | 15 | |

**TECHNICAL FIELDS SEARCHED (IPC)**

G06F

The present search report has been drawn up for all claims

| Place of search | Date of completion of the search | Examiner |
|---|---|---|
| Munich | 30 January 2025 | Fischer, Martin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...................................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 19 2123

This annex lists the patent family members relating to the patent documents cited in the above-mentioned European search report.
The members are as contained in the European Patent Office EDP file on
The European Patent Office is in no way liable for these particulars which are merely given for the purpose of information.

30-01-2025

| Patent document cited in search report | | | Publication date | Patent family member(s) | | Publication date |
|---|---|---|---|---|---|---|
| US 11238340 | B1 | | 01-02-2022 | NONE | | |
| US 2019369719 | A1 | | 05-12-2019 | CN | 110547759 A | 10-12-2019 |
| | | | | CN | 110554771 A | 10-12-2019 |
| | | | | EP | 3575926 A1 | 04-12-2019 |
| | | | | EP | 3575929 A1 | 04-12-2019 |
| | | | | ES | 2916408 T3 | 30-06-2022 |
| | | | | ES | 2926035 T3 | 21-10-2022 |
| | | | | US | 2019369719 A1 | 05-12-2019 |
| | | | | US | 2021034152 A1 | 04-02-2021 |
| US 2021166034 | A1 | | 03-06-2021 | EP | 3828754 A1 | 02-06-2021 |
| | | | | US | 2021166034 A1 | 03-06-2021 |
| JP 2022123612 | A | | 24-08-2022 | JP | 7468393 B2 | 16-04-2024 |
| | | | | JP | 2022123612 A | 24-08-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 11238340 B1


**Non-patent literature cited in the description**

- **RAJAT AGARWALA** ; **OLGA LUKASHOVA SANZ** ; **IMMANUEL P SEITZ** ; **FELIX F REICHEL** ; **SIEGFRIED WAHL**. Evaluation of a liquid membrane-based tunable lens and a solid-state lidar camera feedback system for presbyopia. *Biomedical Optics Express*, 2022, vol. 13 (11), 5849-5859
- A pair of diopter-adjustable eyeglasses for presbyopia correction. **LIHUI WANG** ; **ALVARO CASSINELLI** ; **HIROMASA OKU** ; **MASATOSHI ISHIKAWA**. Novel Optical Systems Design and Optimization XVII. SPIE, 2014, vol. 9193, 369-378
- **NITISH SRIVASTAVA** ; **GEOFFREY HINTON** ; **ALEX KRIZHEVSKY** ; **ILYA SUTSKEVER** ; **RUSLAN SALAKHUTDINOV**. Dropout: a simple way to prevent neural networks from overfitting. *The journal of machine learning research*, 2014, vol. 15 (1), 1929-1958
- **SERGEY LOFFE** ; **CHRISTIAN SZEGEDY**. Batch normalization: Accelerating deep network training by reducing internal covariate shift.. *International conference on machine learning*, 2015, 448-456
- Detection of outliers using interquartile range technique from intrusion dataset. **VINUTHA** ; **B POORNIMA** ; **BM SAGAR**. Information and decision sciences: Proceedings of the 6th international conference on ficta. Springer, 2018, 511-518

- **DAVID C HOAGLIN** ; **FREDERICK MOSTELLER** ; **JOHN W TUKEY**. Understanding robust and exploratory data analysis. John Wiley & Sons, 2000, vol. 76
- **GEORGE EP BOX** ; **DAVID R COX**. An analysis of transformations. *Journal of the Royal Statistical Society:Series B (Methodological)*, 1964, vol. 26 (2), 211-243
- **ILYA LOSHCHILOV** ; **FRANK HUTTER**. Decoupled weight decay regularization. *arXiv preprint arXiv: 1711.05101*, 2017
- **CHENG-YANG FU** ; **MYKHAILO SHVETS** ; **ALEXANDER C BERG**. Retinamask: Learning to predict masks improves state-of-the-art single-shot detection for free. *arXiv preprint arXiv:1901.03353*, 2019
- **SHAOQING REN** ; **KAIMING HE** ; **ROSS GIRSHICK** ; **JIAN SUN**. Faster r-cnn: Towards real-time object detection with region proposal networks. *IEEE transactions on pattern analysis and machine intelligence*, 2016, vol. 39 (6), 1137-1149